# EUROPEAN PATENT APPLICATION

(11) **EP 1 137 205 A1**
(43) Date of publication of application: **26.09.2001**
(21) Application number: 01302217.3
(22) Date of filing: 12.03.2001
(51) Int. Cl.: H04B 10/08, G02B 6/44

(54) **An apparatus and method for identifying active fibers in a fiber distribution frame**

(30) Priority: 23.03.2000 US 532298
(71) Applicant: LUCENT TECHNOLOGIES INC., Murray Hill, New Jersey 07974-0636 (US)
(72) Inventor: Jennings, Mark R., Andover, New Jersey 07821 (US); Landry, David Wayne, Suwanee, Georgia 30024 (US); Leone, Frank S., Berkeley Heights, New Jersey 07922 (US); Pimpinella, Richard J., Hampton, New Jersey 08827 (US)
(74) Representative: Watts, Christopher Malcolm Kelway, Dr.

(57) **Abstract**

An apparatus and method for identifying the status of selected connector ports contained within the framework of a fiber administration system. In a first mode of operation, the status of a particular connector port can be queried at the point of that connector port. Once the query has been initiated, the systems controller of the fiber administration system processes the query and selectively flashes a light next to the connector port. The flashing of the light next to the connector port can indicate whether a connector port is active, inactive or carrying an optical signal above a predetermined power level. In a second mode of operation, the status of connector ports in the fiber administration system can be queried through the systems controller. By entering a query into the systems controller, the systems controller can flash lights next the various connector ports that match the query.

## Description

### BACKGROUND OF THE INVENTION

### 1. FIELD OF THE INVENTION

The present invention relates to an apparatus and method for identifying whether or not a particular optical fiber within a fiber distribution frame is currently carrying an optical transmission.

### 2. DESCRIPTION OF THE PRIOR ART

There are many applications that utilize an optical fiber network to establish communication links between a host digital terminal (HDT) at a central office and an optical network unit (ONU) at a remote location. Rarely does a single fiber extend the full length between the HDT and the ONU without disruption or a break. Rather, optical fiber networks often contain remote stations between the HDT and the ONU. At the various remote stations, optical signals are regenerated to compensate for transmission losses that occur in the optical fibers. Furthermore, remote stations are also used as splicing stations where different optical fiber cables are spliced together.

At both the central office and the various remote stations the optical fibers are terminated within a fiber administration system. The fiber administration system organizes the various optical fibers that lead into, and away from, that station. The fiber administration system contains a station systems controller that is the computer control for the fiber administration system. The systems controller knows the locations of all optical fibers that lead into and away from the fiber administration system. The station systems controller also knows the termination locations of all the optical jumper cords used within the fiber administration system to interconnect different optical fibers.

In each fiber administration system, the various optical fibers are directed into a fiber distribution frame where the individual optical fibers are terminated in an organized manner. Such fiber administration systems are exemplified by the LGX® fiber administration system which is currently manufactured by Lucent Technologies of Murray Hill, New Jersey, the assignee herein. The fiber distribution frames used at the central office are typically large structures that are arranged in parallel rows.

Each fiber distribution frame typically defines a plurality of bays, wherein each bay houses several fiber distribution shelves. On each of the fiber distribution shelves are optical connection ports that receive the ends of all of the individual optical fibers that enter the fiber administration system and are contained within the optical fiber network. By terminating each optical fiber at an optical connection port on one of the different fiber distribution shelves, the location of each optical fiber becomes known within the overall assembly. Once terminated at a known address on one of the fiber distribution shelves, each optical fiber can be administratively managed by the systems controller.

A fiber distribution system may contain thousands of optical connection ports. In order to maintain the quality and integrity of the fiber administration system, the various optical fibers are periodically disconnected from the optical network and are connected to various types of test equipment. Additionally, as the fiber network grows, certain optical fibers get rerouted within the fiber administration system. It is often difficult for a technician to find a specific optical connection port in the thousands of optical connection ports available in a fiber administration system. Accordingly, it is not uncommon for a technician to accidently select the wrong optical connection port and disrupt an optical fiber pathway that should not have been disrupted.

In an attempt to assist a technician in finding a specific optical connection port, tracing systems have been developed that provide a visible indication as to the location of a targeted optical connection port. Such prior art tracing systems are exemplified by U.S. Patent No. 5,448,675 to Leone, entitled Telecommunications Distribution Frame With Tracing. In such systems, a light is lit next to the optical connection port being targeted. A technician can see the light and is immediately led to the targeted optical connection port. The light is an LED that is positioned next to each of the optical connection ports. The LEDs are built into the fiber distribution shelves that support the optical connection ports.

As optical fiber networks are reconfigured over time, many optical fiber pathways become non-functional. However, to reduce the likelihood of a technician accidently disconnected a wrong optical jumper cord, the optical jumper cords are left in place on the fiber distribution frames. Over time, the dead optical jumper cords often have to be removed to make way for new active connections. A technician is therefore dispatched to the fiber distribution frame to remove and reroute various optical jumper cords.

Although many fiber administration systems contain line tracing capabilities, technician still have difficultly locating the proper optical jumper cord connections in the tangle of jumper cords that are present on a fiber distribution frame. If a technician removes the wrong optical jumper cord, an active optical pathway can be disrupted. Furthermore, if a technician disconnects an optical jumper cord that is carrying a strong optical signal, the light emanating from the accidentally disconnected jumper cord is a hazard to the eyesight of the technician.

A need therefore exists for an apparatus that enables a technician to determine whether or not the optical jumper cord he/she is about to disconnect is active, and if so if that optical connection is carrying a potentially harmful optical signal.

### SUMMARY OF THE INVENTION

The present invention is an apparatus and method for identifying the status of selected connector ports contained within the framework of a fiber administration system. The apparatus and method have two modes of operation. In the first mode of operation, the status of a particular connector port can be queried near the point of that connector port. Once the query has been initiated, the systems controller of the fiber administration system processes the query and selectively flashes lights next to various connector ports identified by the query. The flashing of lights next to selected connector ports can indicate whether a connector port is active, inactive or carrying an optical signal above a predetermined power level.

In a second mode of operation, the status of connector ports in the fiber administration system can be queried through the systems controller of the fiber administration system. By entering a query into the systems controller, the systems controller can flash lights next the various connector ports that match the query. Again the purpose of the query is to see which connector ports are active, inactive or potentially hazardous to a technician.

### BRIEF DESCRIPTION OF THE DRAWINGS

For a better understanding of the present invention, reference is made to the following description of an exemplary embodiment thereof, considered in conjunction with the accompanying drawings, in which:
FIG. 1 is a perspective view of an optical fiber administration system containing a first plurality of bays and a second plurality of fiber distribution shelves in each bay; and
FIG. 2 is a schematic view of a fiber administration shelf containing a plurality of connector ports and the systems controller of the fiber administration system.

### DETAILED DESCRIPTION

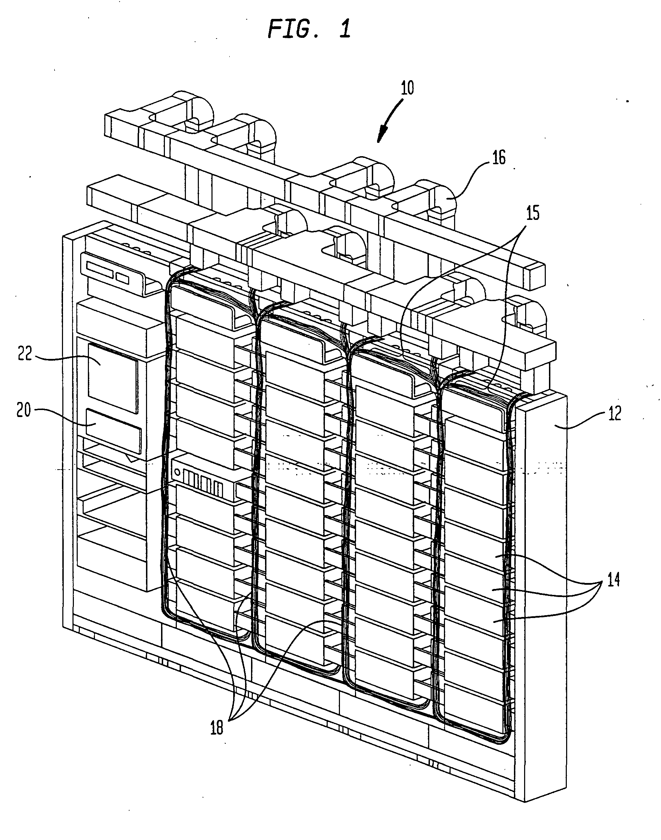

In Fig. 1, an exemplary fiber administration system 10 is shown of the type that is located at a central office or a remote station in an optical fiber network. The exemplary fiber administration system 10 includes a fiber distribution frame 12 that is affixed in a set position to the floor of the station. The fiber distribution frame 12 defines a plurality of bays 15. Each bay 15 is a vertical structure that supports a plurality of fiber distribution shelves 14. The fiber distribution shelves 14 come in one of three standard sizes, having a five inch height, a seven inch height or a nine inch height. A network of conduits 16 lead the various optical fibers from the optical fiber network to the fiber distribution shelves 14. Each of the fiber distribution shelves 14 contains connection ports (not shown) that are interconnected by patch cords 18 that extend throughout the fiber administration frame 12.

In addition to the fiber distribution shelves 14, the fiber administration system 10 also includes a station systems controller 20. The station systems controller 20 runs the electronic operations of the fiber administration system 10. The station systems controller 20 has a display 22 as is typical for computer control systems.

On each of the fiber distribution shelves 14 are connector modules. The connector modules contain visual indicators such as light emitting diodes (LEDs), or any other visual indicator well known in the art. The visual indicators can be selectively illuminated by station systems controller 20. The structure of connector modules having LEDs is disclosed in GB-A-2347752.

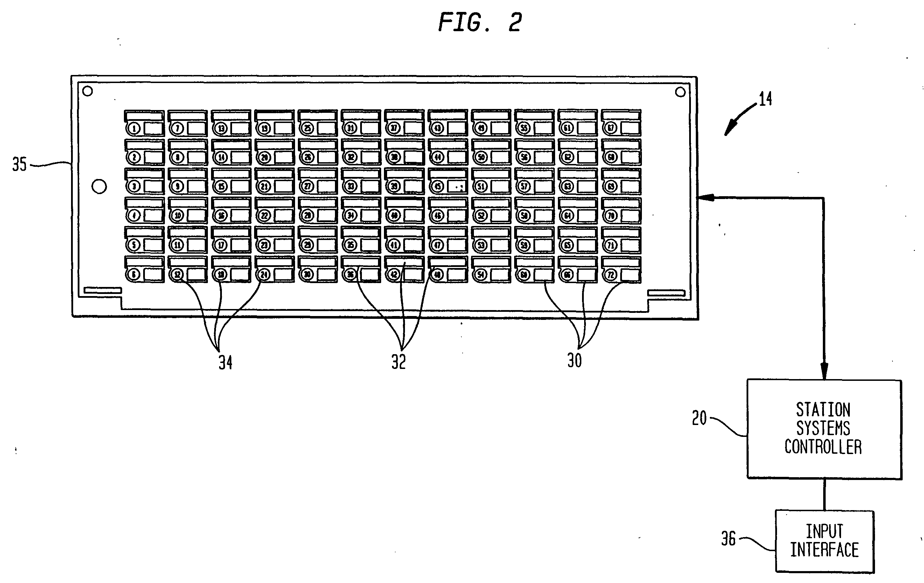

Referring to Fig. 2, the front view of a fiber distribution shelf 14 is shown. There are seventy two connector ports 30 on the shelf. A typical bay 15 (Fig. 1) in a fiber distribution frame 12 (Fig. 1) contains nine such shelves for a total of six hundred and forty eight connector ports 30 per bay. Each connector port 30 is connected to an optical fiber that leads into or away from the fiber administration system 10 (Fig. 1). The connector ports 30 on different shelves 14 and on different bays 15 (Fig. 1) are interconnected by patch cords 18 (Fig. 1) It is through the manipulation of the patch cords 18 (Fig. 1), that connections between different optical fibers in the optical fiber network are made.

From Fig. 2, it can be seen that next to each of the connector ports 30 on a fiber distribution shelf 14 is located an LED 32 that corresponds in position with that connector port 30. The LEDs 32 are all controlled by the systems controller 20. Also contained in the face of the fiber distribution shelf 14 are signaling devices or push buttons 34. The push buttons 34 are also connected to the systems controller 20 of the overall fiber administration system. On the side of the fiber distribution shelf are at least one test button 35.

The invention of the present apparatus operates in two basic modes, which are the manual operations mode and the systems controller operations mode. In the manual operations mode, a technician can press the test button 35 and the push button 34 associated with any of the connector ports 30 on the fiber distribution shelf 14. Once the test button 35 and a particular push button 34 is selected, the systems controller 20 becomes aware that a technician is interested in testing the operational status of a particular connector port 30 and the jumper cord 18 (Fig. 1) that may attach to that connector port 30. The systems controller 20 reviews its administrative database in regard to the connector port 30 queried. If the connector port 30 is inactive, the system controller 20 can indicate this information by flashing the LED 32 at that connector port 30 in a first predetermined sequence. If the connector port 30 is active and has optical transmissions passing through it, the systems controller 20 can flash the LED 32 at that connector port 30 in a second predetermined sequence. Finally, if the connector port 30 is active and the transmissions through the connector port 30 are of potential danger to the technician, the systems controller 20 can flash the LED 32 in a third predetermined pattern.

As such, the present invention enables a technician to check the operational status (active, inactive or carrying a signal above a predetermined power level)of a connector port 30 prior to connecting or disconnecting a patch cord 18 (Fig. 1) to that connector port 30. By checking the status of a connector port 30 prior to engaging the connector port 30, the likelihood that an active optical pathway will be inadvertently disrupted is decreased.

In the systems controller operations mode, queries about the operational status of various connector ports 30 are made through the input interface 36 of the systems controller 30 rather than at the site of a specific connector port 30. For example, a technician can enter a query (a request to find out the operational status of the connector ports) through the keyboard of the systems controller 20. The systems controller processes the query by reviewing its administrative database in regard to that port. The systems controller 20 the identifies all inactive connector ports 30. The systems controller 20 can then cause the LEDs 32 at those connector ports 30 to flash in a predetermined sequence. The query can be made more specific and the systems controller 20 can check to see what connector ports 30 on a specific fiber distribution shelf 14 are inactive or even if one specific connector port 30 is inactive. Similarly, by entering a query into the systems controller 30, a technician can instruct the systems controller 30 to indicate what connector ports 30 are carrying signals that are potentially dangerous to a technician. Again the systems controller 20 has the ability to flash the LEDs 32 at the connector ports 30 that are carrying potentially dangerous signals.

Since the systems controller 20 is connected to the various test buttons, the systems controller 20 can use the test buttons to run a variety of preprogrammed tests. For example, by pressing the test button 35 on a particular fiber distribution shelf, the systems controller can automatically run a testing program that lights all of the lights 32 next to active connector ports 30. Alternatively, the systems controller 20 can light all of the lights 32 next to connection ports 30 carrying amplified light signals that pose a danger to a technician.

It will be understood that the embodiment of the apparatus and method of the invention specifically shown and described is merely exemplary and that a person skilled in the art can make alternate embodiments using different configurations and functionally equivalent components. For example, the sequences by which the systems controller flashes the LEDs to indicate an active port, an inactive port or a dangerous port can be altered as desired by a systems programmer. Furthermore, the software used to query the systems controller can be an any format. All such alternate embodiments are intended to be included in the scope of this invention as set forth in the following claims.

## Claims

1. A method of determining an operational status of a connector port in a fiber administration system of an optical fiber network, the fiber administration system being cooperatively linked with a systems controller, the method comprising the steps of:
initiating a query within the fiber administration system proximate a connector port for which the operational status is to be determined;
processing the query through the systems controller; and
providing a visual indicator proximate the connector port indicating the operational status of the connector port.

2. The method according to Claim 1, further comprising the step of providing an indication proximate the connector port if the connector port is carrying an optical signal above a predetermined power threshold.

3. The method according to Claim 1, wherein the step of initiating a query further comprises the step of engaging a signaling device proximate the connector port whose status needs to be known.

4. The method according to Claim 1, wherein the visual indicator is a light proximate the connector port whose status is queried.

5. The method according to Claim 4, wherein the light proximate the connector port whose status is to be determined is selectively illuminated in a first predetermined pattern indicative of an active operational status.

6. The method according to Claim 4, wherein the light proximate the connector port whose status is to be determined is selectively illuminated in a second predetermined pattern indicative of an inactive operational status.

7. The method according to Claim 4, wherein the light proximate the connector port whose status is to be determined is selectively illuminated in a third predetermined pattern indicative of the presence of an optical signal exceeding a predetermined threshold power level.

8. A method of determining the operational status of at least one specified connector port in a fiber administration system of an optical fiber network that contains a systems controller, the method comprising the steps of:
initiating a query through the systems controller of the fiber administration system in respect to an operational status of at least one connector port ' within fiber administration system;
providing a visual indicator proximate ones of the connector ports for which the operational status query is initiated, indicative of the operational status of the connector ports.

9. The method according to Claim 8, wherein the step of initiating a query further comprises the step of inputting manually the query into the systems controller of the fiber administration system.

10. The method according to Claim 8, wherein the step of initiating a query further comprises the step of forwarding the query into the systems controller of the fiber administration system from a remote location.

11. The method according to Claim 8, further comprising the step of initiating a second query through the systems controller of the fiber administration system to identify connector ports within the fiber administration system that are carrying optical signals above a predetermined power threshold.

12. The method according to Claim 11, further comprising the step of indicating at a point proximate a connector port if the connector port is carrying an optical signal above a predetermined power threshold.

13. The method according to Claim 8, wherein the visual indicator is a light proximate each connection port and the step of providing a visual indicator further comprises the step of illuminating the light proximate the connector port whose status is queried.

14. The method according to Claim 13, wherein the light proximate the connector port whose status is queried is selectively illuminated in a first predetermined pattern indicative of an active operational status.

15. The method according to Claim 13, wherein the light proximate the connector port whose status is queried is selectively illuminated in a second predetermined pattern indicative of an inactive operational status.

16. The method according to Claim 13, wherein the light proximate the connector port whose status is queried is selectively illuminated in a third predetermined pattern indicative of the presence of an optical signal exceeding a predetermined threshold power level.

17. A fiber administration apparatus, comprising:
a plurality of connector ports linked with optical fibers in an optical fiber network, wherein each of the connector ports has a light and a push button associated with it;
a systems controller coupled to the plurality of connector ports, wherein the systems controller retains administrative information on the status of each of the plurality of connector ports and the systems controller selectively flashes the light at one of the plurality of connector ports when the push button at that connector port is pressed, thereby providing a visual indication at a specific connector port as to the status of that connector port.

18. The apparatus according to Claim 17, wherein the systems controller selectively flashes the light in a predetermined pattern indicative of an active operational status.

19. The apparatus according to Claim 17, wherein the systems controller selectively flashes the light in a predetermined pattern indicative of an inactive operational status.
